# EUROPEAN PATENT APPLICATION

(11) **EP 0 685 754 A1**
(43) Date of publication of application: **06.12.1995**
(21) Application number: 95303385.9
(22) Date of filing: 22.05.1995
(51) Int. Cl.: G02C 1/02, G02C 1/04

(54) **A pair of spectacles**

(30) Priority: 23.01.1995 JP 158/95; 30.05.1994 JP 6066/94
(71) Applicant: KABUSHIKI KAISHA NAKATANI, Sabae-shi, Fukui 916-11 (JP)
(72) Inventor: Nakatani, Hideji, Sabae-shi, Fukui 916-11 (JP)
(74) Representative: Pearce, Anthony Richmond

(57) **Abstract**

A pair of spectacles which are wide in vision and in which the lenses 1 are securely held in position, comprises a support F formed of arched frame parts 2, a bridge 5 and end pieces 6. A retaining hole 11 is drilled through each lens 1 on the ear side thereof. A cord 3 whose ends are engaged in openings 21 in the ends of each frame part 2, engages in a groove 12 provided around the respective lens 1 to retain the lens in position relative to the support F. A strap 4 extends from the end of each frame part 2 on the ear side over the respective lens 11 in corbelled or cantilever fashion. An assembly of screw 91 and nut 93 serves to secure each support 4 to the respective lens 1.

## Description

### Field of the Invention

This invention relates to a pair of spectacles having a novel retaining mechanism to prevent the lenses becoming detached and which incorporates advantages of known frameless or half-frame spectacles.

### Background of the Invention

Nowadays, many spectacle wearers tend to favour frameless or half-frame spectacles because these are wide in vision and light in weight as well as having a refined shape from the viewpoint of design. In known frameless spectacles, each lens has two retaining holes therethrough, one in the vicinity of the circumferential edge region on the nose side thereof and the other in the vicinity of the circumferential edge region on the ear side thereof, without the use of any surrounding frame to support the lenses.

In known half-frame spectacles, the half-frame extends around the upper half of each lens whilst a nylon cord extends around the lower half of each lens.

In known full-frame spectacles, the whole of the circumference of each lens is surrounded by a frame. In order to maximise the field of vision, it is known to form the full-frame out of a super-elastic alloy or a shape-memory alloy to provide a very thin frame. These are also favoured because of their lightness and field of vision.

However, with the above-described known frameless spectacles, there are a number of drawbacks because the lenses are retained using screw and nut assemblies. Such assemblies tend to work loose in use and also obscure the user's view, particularly on the nose side thereof because of the need to provide a nose pad and nose pad support arm. Such an arrangement tends to look overly crowded in comparison with the ear side and therefore can adversely affect the appearance of the spectacles.

To reduce the tendency for the screw and nut assembly to work loose, it is possible to enlarge the parts which retain the lenses. But the larger those parts become, the more they interrupt the wearer's view, and the greater the spoiling of the desirable features of frameless spectacles, namely lightness and simplicity of appearance.

With regard to the half-frame spectacles mentioned above, the cord used for supporting the lenses can become loose or may snap as a result of temperature changes and wear and tear. Thus, the expensive lenses may fall out and become damaged, and also the wearer may get injured. For example, if the cord suddenly snaps when the wearer is driving a car, there is even a risk of loss of life. For product liability reasons, it is in the interests of the spectacle manufacturers and retailers to minimise such a risk by ensuring that the lens-retaining parts are adequately secure. There is also a strong public demand for spectacles of a design in which the lenses are securely held in place.

With regard to the full-frame spectacles mentioned above, since the lens-retaining groove in the frame becomes shallower as the depth of the frame becomes thinner, the lenses can easily slip out of the frame if the frame slackens even a little owing to vibration and so forth.

Therefore, taking into account the contradictory requirements of simplicity and lightness on the one hand and durability of the lens-retaining mechanism on the other hand, it is an object of the present invention to provide a pair of spectacles having a novel lens-retaining mechanism which can enable these contradictory requirements to be satisfied.

Also, another object of the present invention is to provide a spectacle design which can have a refined and shapely appearance and in which the provision of a nut and screw assemblies on the nose side of the lenses can be avoided and the size of the retaining parts on the ear side of the lenses can be greatly reduced as well.

### Summary of the Invention

The present invention has solved the aforesaid problems by combining together the best features of frameless, half-frame and full-frame spectacles in a novel and advantageous way.

According to the present invention, there is provided a pair of spectacles comprising a pair of lenses carried by a support in the desired mutual disposition so that bridge of the support is disposed between the lenses, characterised in that each lens has a retaining hole therethrough adjacent the circumferential edge of the lens, preferably on the ear side thereof, and a strap extends from each end of the support and is secured to the respective lens by a securing element engaging said retaining hole.

In one preferred embodiment, the support includes a pair of frame parts and a pair of end pieces, each frame part extending over the upper edge portion of a respective one of the lenses and being connected adjacent one of its ends with the bridge and adjacent the other of its ends with a respective one of the end pieces; wherein a respective cord is secured to opposite ends of each frame part and engages in a groove in the peripheral edge of the respective lens to retain the lens in position against the support; and wherein a respective support arm is pivotally engaged with each end piece. Each strap may be either secured to the frontal side or to the ocular side of the respective lens. The groove may extend around the whole of the periphery of each lens.

In another preferred embodiment, the support includes a pair of full frames which hold the lenses by surrounding the whole periphery thereof, the full-frames being interconnected by the bridge, the support including a respective end piece which is connected to a respective one of the full-frames at an outer region thereof, and wherein a respective support arm is pivotally connected with each end piece.

Preferably, a nose pad is fixed to said support at said bridge or at a respective one of the frame parts. Preferably also, each securing elementis a securing screw which is engaged with a nut, the securing screw extending through the retaining hole in the respective lens and through a hole provided in a respective one of the straps.

### Brief Description of the Drawings

In the accompanying drawings:-
Fig 1 is a perspective view of a pair of wide-field vision spectacles according to a first embodiment of the present invention;
Fig 2 is an exploded perspective view of one side portion of the spectacles of Fig 1;
Fig 3 is a top plan view of one side portion of the spectacles of Fig 1;
Fig 4 is a perspective view of a pair of wide-vision spectacles according to a second embodiment of the present invention;
Fig 5 is an exploded perspective view of one side portion of the spectacles of Fig 4;
Fig 6 is a top plan view of one side portion of the spectacles of Fig 4;
Fig 7 is an exploded perspective view of one side portion of a pair of wide-field vision spectacles according to a third embodiment of the present invention; and
Fig 8 is an exploded perspective view of one side portion of a pair of wide-field vision spectacles according to a fourth embodiment of the present invention.

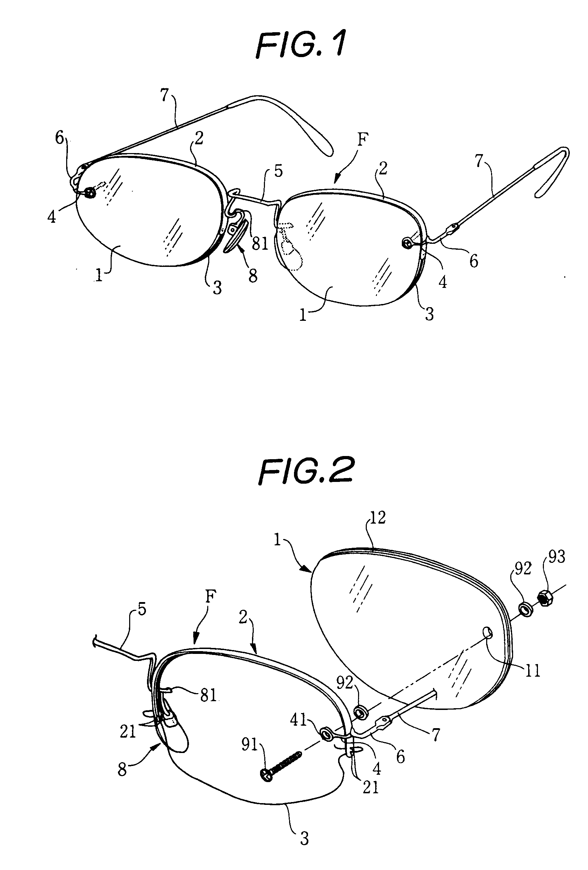

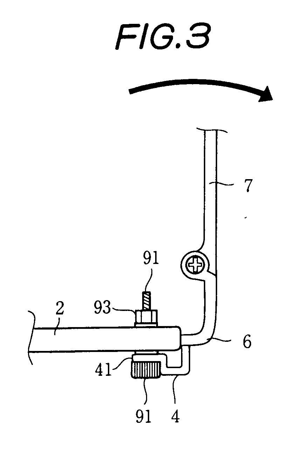

Referring now to Figs 1 to 3 of the drawings, numeral 1 indicates a pair of lenses through each of which one lens-retaining hole 11 is drilled adjacent the outer circumferential edge region on the ear side thereof. A fitting groove 12 for supporting the lens 1 is provided which extends completely around the peripheral edge of each lens 1. The lenses 1 are retained together in the required mutually spaced, side-by-side disposition by a support F comprising arched frame parts 2, a bridge 5 and respective outer end pieces 6 described in detail below.

Each arched frame part 2 extends over and embraces the upper circumferential edge portion of the respective lens and, at each end, has a pair of holes 21 drilled therethrough to receive the respective end of a transparent retaining cord 3 made from nylon filament. The lenses 1 are retained in engagement with the arched frame parts 2 by the respective retaining cords 3 which are engaged in the respective grooves 12. The bridge 5 interconnects the arched frame parts 2 so as to retain the lenses 1 in the required mutually spaced disposition. In the present embodiment, the bridge 5 is provided with pad arms 81 which are integrally formed with the bridge 5. A nose pad 8 is mounted on the end of each pad arm 81 for pivotal movement to a limited extent.

The outer end pieces 6 of the support F are connected to the ends of the respective arched frame parts 12 remotely from the bridge 5, i.e. on the ear sides of the frame parts 2. A lateral support arm 7 for engagement over the ear of the user is pivotally attached to each outer end piece 6 to enable the arms 7 to be folded relative to the remainder of the spectacles.

At the junction between each outer end piece 6 and the respective arched frame part 2, there is connected a strap 4 which first extends forwardly to the frontal side of the respective lens 1 and which then bends inwardly with respect to the latter so that a hole 41 therethrough is aligned with the respective hole 21 through the lens 11. The arched frame parts 2 and the lenses 1 are secured together by the provision of screws 91 which extend through the holes 11 and 41 and which are secured with nuts 93 and washers 92.

It will thus be appreciated that, with this design of spectacles, the securing of the arched frame parts 2 and the lenses 1 using screw and nut assemblies is effected only on the ear sides of the lenses. In other words, the use of screw and nut assemblies on the nose sides of the lenses is avoided, with the result that the view afforded to the wearer is less interrupted. Of course, the sole provision of the strap 4 and the screw and nut assembly on the ear side of each lens 1 is not sufficient in itself, hence the provision of the above-described retaining cord 3 for each lens 1. The resultant assembly serves to retain the lenses in position very securely by making best use of the most advantageous features of half-frame spectacles and frameless spectacles. In particular, it is to be appreciated that, in the event that the cord 3 becomes loose or snapped, the screw and nut assembly will prevent the lens 1 from dropping out and becoming damaged. It is further to be appreciated that the extent by which each arched frame part 2 embraces its respective lens 1 can be sufficient to provide, in itself, a limited form of lens retention.

Furthermore, the provision of the strap 4 resists outwardly directed forces applied to the lateral support arm 7 and so makes it possible to keep the cross-sectional area of the arched frame part to a minimum. Without the strap 4, a thicker and deeper section of frame part would be required. The same applies also to the end pieces 6 which can be made much smaller because of the provision of the strap 4. With the spectacles according to this embodiment, the arched frame parts 2 can be made so thin that they are almost invisible and provide a minimum of obstruction to the field of view of the wearer.

It is also to be appreciated that the spectacles according to the present invention can overcome the problem of the lens dropping out if the associated screw and nut assembly becomes loose because, in such an event, the design of the arched frame part 2 and the retaining cord 3 will serve to retain the lens 1. Because of the dual way in which each lens 1 is, it is possible to make the strap 4 much smaller than the corresponding part of a conventional pair of frameless spectacles so that the presence of the straps is less conspicuous in terms of the field view of the wearer at both outer edge portions of the support (F).

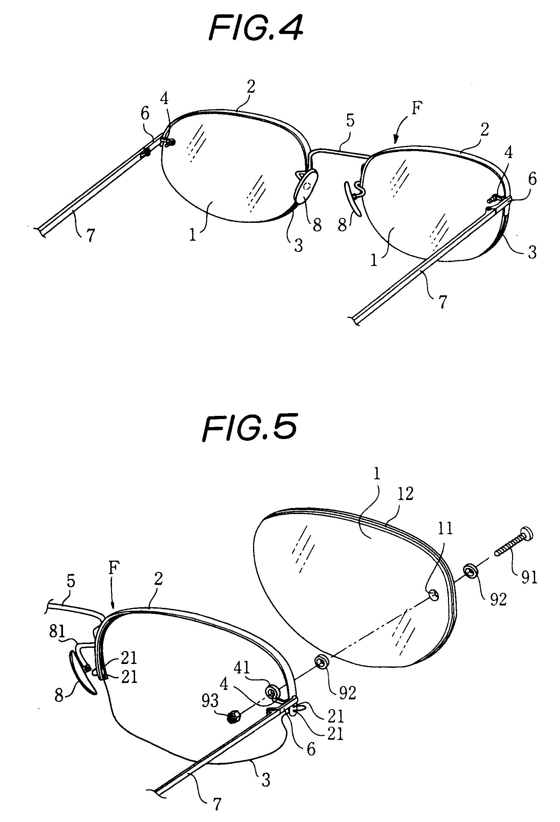

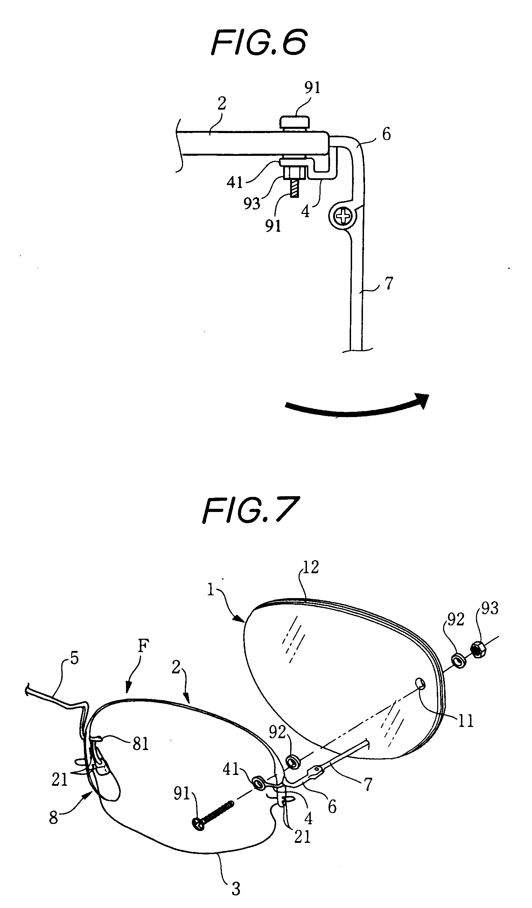

Referring now to Figs 4 to 6, the second embodiment of the pair of spectacles is similar to that of the embodiment of Figs 1 to 3 and similar parts are accorded the same reference numerals. In this second embodiment, each strap 4, instead of extending over the frontal side of the respective lens, extends laterally over the ocular side of the respective lens 1. As can be seen from Fig 6, the strap 4 first extends rearwardly from the connection between the end piece 6 and the frame part 2, and then is bent to extend inwardly (i.e. towards the bridge 5). The strap 4 then extends forwardly (i.e. away from the eye) and then again inwardly to terminate opposite the retaining hole 11 in the lens 1, with the hole 41 in alignment with the hole 11. With such a design of strap 4, variations in the thickness of the lens 1 at the circumference thereof (to suit the eye prescription of the wearer ) can be accommodated easily. The strap 4, like that of Fig 1, not only assists in retaining the lens 1 in position, but also plays a supplementary role in resisting external forces tending to twist the frame part 2. Thus, if the lateral support arm 7 is subjected to an external force in the direction of the arrow illustrated in Fig 6, with a conventional pair of half-frame spectacles, the portion of the frame F in the vicinity of the connection with the end piece 6 becomes twisted with the result that the lens can become damaged. However, the presence of the strap 4 in the spectacles of the present invention serves to oppose this twisting of the frame part 2 and consequently the risk of damage to the lens 1 is reduced.

Referring now to Fig 7 of the accompanying drawings, the pair of spectacles illustrated therein is similar to that of the embodiment of Figs 1 to 3 and similar parts are accorded the same reference numerals. In the embodiment of Fig 7, however, each frame part 2 is particularly thin except for its end regions. Indeed, over its thin region, each frame part 2 is contained completely within the respective fitting groove 12 formed around the periphery of the lens 1. The end portions of each frame part 2 are only sufficiently wide as to enable the pairs of openings 21 to be drilled therethrough for insertion and fixing of the cord 3 therein and to enable the strap 4, bridge 5 and end piece 6 to be connected thereto. Even with this form of construction where the majority of the arched frame part 2 has the thinnest possible width, the lenses 1 are still retained securely against dropping out of the support (F) and it is also possible to prevent such frame parts from being twisted by external forces because of the positioning of the straps 4 as described previously.

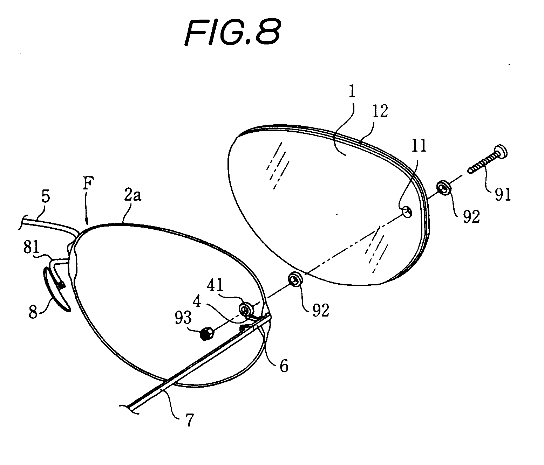

Referring now to Fig 8 of the drawings, there is illustrated a pair of full-frame spectacles where the lenses 1 are retained in position by a full-frame 2a rather than a part-frame and a cord. The full-frame 2a surrounds the whole of the circumference of the respective lens 1 and is extremely thin. In the embodiment of Fig 8, the full frame 2a is formed by bending a wire to the shape of the lens 1 and connecting the ends of the wire by double clamping blocks (not shown) provided on the underside of the respective end piece 6. As illustrated in Fig 8, the strap 4 is engaged against the ocular side of the lens 1 in a similar manner to that described above in relation to Figs 4 to 6. The strap 4 extends from the respective end piece 6.

The spectacles of the embodiment illustrated in Fig 8 possess the same advantages as those described above in relation to the spectacles of Figs 1 to 3 and of Figs 4 to 6. Even if the clamping blocks securing the ends of the wire forming the full frame 2a become slackened or completely unclamped as a result of vibration and so forth, the provision of the screw and nut assembly ensures that the lens will never drop out.

It will be appreciated that, in all of the above-described embodiments, the strap 4 extends in corbelled or cantilever fashion from the part to which it is connected (either the frame part 2 or 2a, or the end piece 6, or both).

Various modifications can be made within the scope of the invention as defined by the claims. For example, in all of the illustrated examples, each strap 4 extends in corbelled or cantilever fashion from the ear side of the support (F). However, in the event that there is no problem in obstruction to the view of the wearer, it is also possible to corbell or cantilever the strap 4 from other locations, such as the nose side of the frame part 2. It is possible to select any position for corbelling or cantilevering the strap 4 to the support (F) having regard to the overall appearance of the spectacles.

## Claims

1. A pair of spectacles comprising a pair of lenses (1) carried by a support (F) in the desired mutual disposition so that bridge (5) of the support (F) is disposed between the lenses (1), characterised in that each lens (1) has a retaining hole (11) therethrough adjacent the circumferential edge of the lens (1) and a strap (4) extends from each end of the support (F) and is secured to the respective lens (1) by a securing element (91) engaging said retaining hole (11).

2. A pair of spectacles as claimed in claim 1, wherein each lens (1) has the retaining hole (11) therethrough adjacent the circumferential edge of the lens (1) on the ear side thereof.

3. A pair of spectacles as claimed in claim 1 or 2, wherein the support (F) includes a pair of frame parts (2) and a pair of end pieces (6), each frame part (2) extending over the upper edge portion of a respective one of the lenses (1) and being connected adjacent one of its ends with the bridge (5) and adjacent the other of its ends with a respective one of the end pieces (6); wherein a respective cord (3) is secured to opposite ends of each frame part (2) and engages in a groove (12) in the peripheral edge of the respective lens (1) to retain the lens (1) in position against the support (F); and wherein a respective support arm (7) is pivotally engaged with each end piece (6).

4. A pair of spectacles as claimed in claim 3, wherein each strap (4) is secured to the frontal side of the respective lens (1).

5. A pair of spectacles as claimed in claim 3, wherein each strap (4) is secured to the ocular side of the respective lens (1).

6. A pair of spectacles as claimed in any preceding claim, wherein the groove (12) extends around the whole of the peripheral edge of each lens (1).

7. A pair of spectacles as claimed in claim 1 or 2, wherein the support (F) includes a pair of full frames (2a) which hold the lenses (1) by surrounding the whole periphery thereof, the full frames (2a) are interconnected by the bridge (5), the support (F) includes a respective end piece (6) which is connected to a respective one of the full-frames (2a) at an outer region thereof; and a respective support arm (7) is pivotally connected with each end piece (6).

8. A pair of spectacles as claimed in any one of claims 3 to 6, wherein a nose pad (8) is fixed to said support (F) at said bridge (5) or at a respective one of the frame parts (2, 2a).

9. A pair of spectacles as claimed in any preceding claim, wherein each securing element (91) comprises a securing screw which is engaged with a nut (93), the securing screw extending through a respective one of the retaining holes (11) and a hole (41) provided in a respective one of the straps (4).
